# EUROPEAN PATENT APPLICATION

(11) **EP 2 536 165 A2**
(43) Date of publication of application: **19.12.2012**
(21) Application number: 12171836.5
(22) Date of filing: 13.06.2012
(51) Int. Cl.: H04N 21/433, H04N 21/84

(54) **Storing content corresponding to programs**

(30) Priority: 13.06.2011 GB 201109881; 07.06.2012 KR 20120061087
(71) Applicant: Samsung Electronics Co., Ltd., Suwon-si, Gyeonggi-do, 443-742 (KR)
(72) Inventor: Alder, Christopher, Staines, Middlesex TW18 4QE (GB); Bernard, Thomas, Staines, Middlesex TW18 4QE (GB)
(74) Representative: Robinson, Ian Michael

(57) **Abstract**

A broadcast receiving apparatus, a broadcast receiving method and a display apparatus are provided. A broadcast receiving apparatus connectable to a display apparatus includes a receiving unit which receives a broadcast stream, a processing unit which processes a signal so as to obtain a program usable in the broadcast stream, a plurality of content items respectively corresponding to the program and content item information regarding each of the plurality of content items, a storage unit which stores the plurality of content items which are signal processed and the content item information, and the content item information includes a program identifier and at least one group identifier related to the content items.

## Description

### CROSS-REFERENCE TO RELATED APPLICATIONS

This application claims two priorities from U.K. Patent Application No. GB1109881.1, filed on June 13, 2011, in the U.K. Intellectual Property Office, And Korean Patent Application No. 2012-0061087, filed in the Korean Intellectual Property Office on June 7, 2012, the disclosure of which is incorporated herein by reference in by reference.

### BACKGROUND

The present invention relates to a broadcast receiving apparatus and a broadcast receiving method thereof, and more particularly, to a broadcast receiving apparatus which stores content items corresponding to a program available in a broadcast stream and receiving content item information corresponding to each of the content items and a broadcast receiving method thereof.

In a conventional television broadcast system, a receiver is configured to receive programs through a broadcast stream which includes a plurality of channels. The receiver tunes to one of the channels to receive a program currently being transmitted on that channel.

In recent years, television on-demand systems have been developed to enable a user to access certain programs at a time of their choosing. An example of such a system is TV-Anytime, developed by the global TV-Anytime Forum. In an on-demand system, a receiver is provided with a storage module that has sufficient capacity to store a large number of programs. The receiver also receives metadata relating to each program, which can be used by a broadcaster to signal content that may be of interest to a user.

For example, in the UK, the technical specification for digital terrestrial television broadcasts is published in the "D-Book". The D-Book defines a Broadcast Record Lists feature which allows a user to subscribe to one or more Record List groups, in which programs may be grouped according to genre. Examples of possible Record List groups include "Classic Films", "News", or "Best Comedy of the Last Week". When the metadata indicates that a program in the broadcast stream belongs to a Record List group to which the user has subscribed, the program is automatically stored by the receiver. A user can select a stored program to be viewed at a later stage.

However, in existing broadcast systems, promotional content such as trailers and teasers are only broadcast in linear fashion through the broadcast stream. A trailer can only be viewed by a user if the receiver happens to be tuned to the appropriate channel during a time when the trailer is being broadcast.

### SUMMARY

Exemplary embodiments of the present invention address at least the above problems and/or disadvantages and provide at least the advantages described below.

According to the present invention there is provided an apparatus and method as set forth in the appended claims. Other features of the invention will be apparent from the dependent claims, and the description which follows.

Accordingly, an exemplary aspect of the present invention is to provide a broadcast receiving apparatus which receives content items and content item information corresponding to a program available in a broadcast stream, a broadcast receiving method and a display apparatus thereof.

According to an exemplary aspect of the present invention, there is provided a broadcast receiving apparatus connectable to a display apparatus including a receiving unit which receives a broadcast stream, a processing unit which processes a signal so as to obtain a program usable in the broadest stream, a plurality of content items respectively corresponding to the program and content item information regarding each of the plurality of content items, a storage unit which stores the plurality of content items which are signal processed and the content item information, the content item information may include an identifier of the program and at least one group identifier related to the content items, and the program identifier may identify a program corresponding to the content items, and the at least one group identifier may identify at least one content item group including the plurality of content items.

The processing unit may select the plurality of content items stored in the storage unit based on at least one group identifier.

The receiving unit may receive virtual channel information defining a virtual channel and the processing unit may select the at least one content item based on the virtual channel information.

The processing unit may select the at least one content item based on at least one or more of the at least one group identifier, time of the program and channels of the program.

The broadcast receiving apparatus may be a DVB-compliant receiver, the program identifier and the at least one group identifier may be content reference identifiers included in data received though the broadcast stream.

The content item information may further include locator information to identify a source so as to obtain the content items.

The receiving unit may receive the plurality of content items through the broadcast stream and the processing unit may identify a location of the content items in the broadcast stream by the locator information.

The broadcast receiving apparatus may be a DVB-compliant receiver and the locator information may define an event information table in the broadcast stream.

The broadcast receiving apparatus may be a DVB-compliant receiver receiving the plurality of content items through a digital storage media command and control carousel (DSM CC carousel).

The content item information may further include information regarding a type of providing the content items.

The providing type may be any one of a video file type, a still video file type and a HTML file type.

The processing unit may determine storage space capacity usable in the storage unit and control to store content items provided in one of predetermined providing types in the storage unit if a size of the usable storage space capacity is less than a predetermined value.

The processing unit may determine whether a program corresponding to the stored content items is usable through the broadcast stream and delete the content items from the storage unit if the program is not usable.

The content item information may further include deletion information regarding whether the content items are deleted or not and the processing unit may not delete the content items although the program is not usable if the deletion information orders not to delete the content items.

The processing unit may delete the content items after a predetermined time interval if the deletion information orders not to delete the content items.

According to another exemplary of the present invention, there is provided a display apparatus including a receiving unit which receives a plurality of content items respectively corresponding to a program usable in a broadcast stream and content item information regarding each of the plurality of content items, a storage unit which stores the plurality of content items and the content item information, a display unit which displays at least one relevant content item corresponding to the selected program in response to a selecting command of the processing unit, the content item information may include a program identifier usable in the broadcast stream and at least one group identifier related to the content items, and the program identifier may identify a program corresponding to the content items, and the at least one group identifier may identify the at least one content item group including content items.

The display unit may consecutively display the at least one selected content item by a virtual channel.

According to another exemplary of the present invention, there is provided a broadcast receiving method including storing a plurality of content items respectively corresponding to a program usable in a broadcast stream, receiving content item information for each of the plurality of the content items, storing content item information including at least one group identifier related to a program identifier and the content items, the program identifier may identify a program corresponding to the stored content items and the at least one group identifier may identify at least one content item group including the content items.

The broadcast receiving method may further include selecting stored content items based on the at least one group identifier related to the content items.

The broadcast receiving method may further include receiving a command to select at least one of the programs and displaying at least one related content item corresponding to the selected program and which is related to the same program identifier as that of the selected program.

The broadcast receiving method may include selecting at least one content item from among the plurality of stored content items and consecutively displaying the at least one selected content item by a virtual channel.

The broadcast receiving method may further include receiving virtual channel information to define a virtual channel and the selecting at least one content item may include selecting the at least content item based on the virtual channel information.

The plurality of content items may be selected based on at least one of the at least one group identifier, time of the program and channels of the program.

### BRIEF DESCRIPTION OF THE DRAWINGS

Embodiments of the present invention will now be described, by way of example only, with reference to the accompanying drawings, in which:
Figure 1 is a block diagram for illustrating a broadcast receiving apparatus, according to an embodiment of the present invention;
Figure 2 is a block diagram for illustrating a broadcast receiving apparatus, according to another embodiment of the present invention;
Figure 3 is a block diagram for illustrating a broadcast receiving apparatus, according to another exemplary embodiment.
Figure 4 illustrates a structure of the content item information, according to an embodiment of the present invention;
Figure 5 illustrates elements of the GroupInformation data fragment Fig 4;
Figure 6 illustrates elements of the PushDownloadProgram data fragment of Fig. 4;
Figure 7 illustrates elements of the ProgramInformation data fragment of Fig. 4;
Figure 8 illustrates a user interface for displaying a plurality of different types of content items corresponding to a selected programprogram, according to an embodiment of the present invention;
Figure 9 illustrates a user interface for displaying a content item corresponding to a selected programprogram, according to an embodiment of the present invention;
Figure 10 illustrates a user interface for displaying a content item corresponding to a program currently being viewed, according to an embodiment of the present invention;
Figure 11 illustrates a user interface for displaying information about a selected virtual trailer channel;
Figure 12 is a flowchart illustrating a method for use in an apparatus for receiving a broadcast stream, according to an embodiment of the present invention; and
Figure 13 is a flowchart illustrating a method of managing stored content items, according to an embodiment of the present invention.

### DETAILED DESCRIPTION

Certain exemplary embodiments of the present inventive concept will now be described in greater detail with reference to the accompanying drawings.

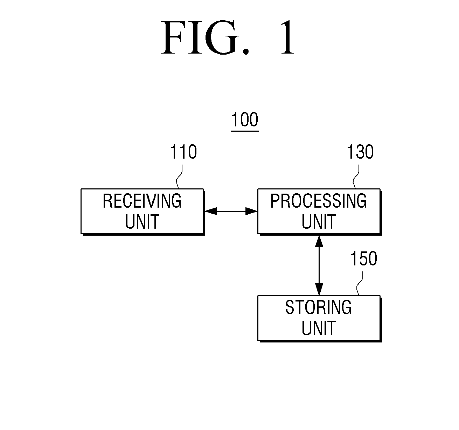

Fig. 1 is a block diagram for illustrating a broadcast receiving apparatus, according to an exemplary embodiment of the present invention.

Referring to Fig. 1, a broadcast receiving apparatus 100 includes a receiving unit 110, a processing unit 130 and a storage unit 150.

The receiving unit 110 receives audio-visual (A/V) data through a broadcast stream.

The processing unit 130 receives a broadcast stream, adjusts a channel in the broadcast stream and decodes the A/V data of the program received from the adjusted channel. The processing unit 130 may control to transmit the decoded A/V data to a separate display apparatus or to store the decoded A/V data in the storage unit 150.

According to an exemplary of the present invention, the processing unit 130 adjusts a channel of a broadcast stream and signal-processes A/V contents, meta data and content items including the received broadcast stream. In addition, the processing unit 130 performs overall controlling operations of the broadcast receiving apparatus 100. For example, the processing unit 130 selects and reads out at least one of A/V data, a plurality of content item information and a plurality of content items stored in the storage unit 150.

The processing unit 130 may select at least one content item based on at least one of at least one group identifier, time of an A/V program and a channel of an A/V program.

The storage unit 150 stores the decoded A/V/ data. The storage unit 150 may be embodied as a type of non-volatile memory such as hard disk drive and flash memory drive.

As shown in Fig. 1, the broadcast receiving apparatus 100 connects to a display apparatus and may be embodied as a set top box which displays a broadcast stream received through the display apparatus. Hereinafter, an exemplary of embodiment of the broadcast receiving apparatus 100 connectable to the display apparatus and shown in Fig. 1 will be explained.

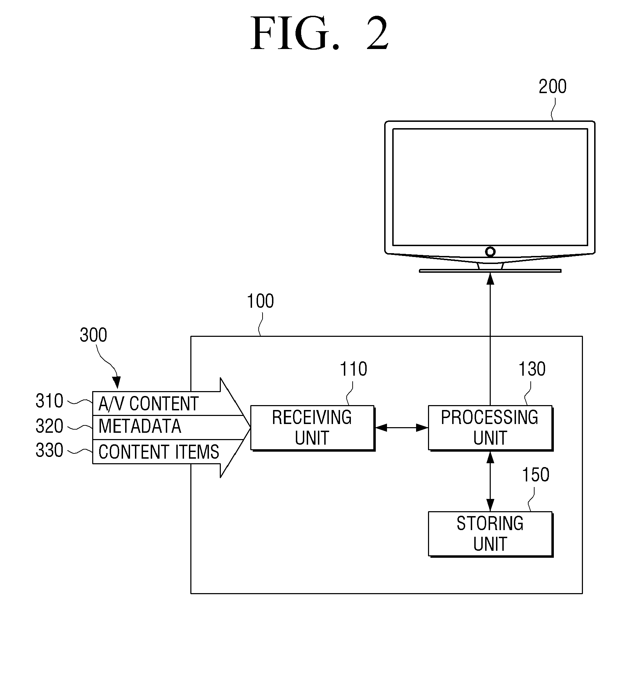

Fig. 2 is a block diagram for illustrating a broadcast receiving apparatus connectable to a display apparatus, according to an exemplary embodiment of the present invention.

Referring to Fig. 2, the broadcast receiving apparatus 100 may connect to a display apparatus 200. That is, the broadcast receiving apparatus 100 receives a broadcast stream, signal-processes the received broadcast stream and displays the signal processed A/V program through the display apparatus 200.

The broadcast receiving apparatus 100 will be explained in detail as below.

The receiving unit 110 may receive audio-visual (A/V) data of a plurality of programs 310, meta data 320 and content items 330 through a broadcast stream 300. At this time, the plurality of programs may be transmitted to multiple channels of the broadcast stream 300. In the exemplary embodiment of the present invention, the broadcast receiving apparatus 100 receives the broadcast stream 300 via the receiving unit 110 and adjusts the channel selected by the broadcast stream 300 via the processing unit 130. The broadcast receiving unit 100 performs a decoding process on A/V data 131 of a program currently being broadcast on a channel adjusted by the processing unit 130.

The processing unit 130 transmits decoded A/V data to display for a user to the display apparatus 200. In Fig. 2, the processing unit 130 is illustrated as a single module for clarity, but functions of the processing unit 130 may extend to a plurality of separate modules. For example, separate tuners and decoder modules may be provided for tuning and decoding the broadcast stream 300.

The broadcast receiving apparatus 100 further includes the storage unit 150 which stores the content items 330 corresponding to a program usable in the broadcast stream 300. Herein, the term "content item" may refer to promotional material including trailers, teasers, still images and webpages. Trailers typically last about between 60 and 90 seconds, while teasers typically last about 15 and 30. A plurality of content items have different types from each other. Teasers and trailers may be provided as an appropriate video file type such as moving picture experts group (MPEG) file type, still images may be provided as a type of joint photographic experts group (JPEG), graphics interchange format (GIF), or bitmap (BMP) file and webpages are provided as a type of hypertext markup langage (HTML) or extensible markup langage (XML). The storage unit 150, for example, may be another type of non-volatile memory such as hard disk drive and flash memory drive. The storage unit 150 is used for storing not only a plurality of content items but also A/V data of the received program through the broadcast stream 300. The broadcast receiving unit 100 may record the selected program.

In an exemplary embodiment, the content items are not delivered to a receiver as a conventional linear broadcast. Instead, the broadcast receiving apparatus 100 is configured to automatically store the content items, as well as additional metadata for each stored content item. This additional metadata enables multiple content items of different types linked to one or more programs available in the broadcast stream to be executable.

Referring to Fig. 2, the receiving unit 110 may be configured to receive meta data 320 for each of the content items. The meta data 320, for example, may be content item information related to content items. The meta data 320 for each of the content items may include a program identifier and at least one group identifier related to the content items. The processing unit 130 may use the program identifier to identify a program corresponding to the content items, and may use at least one group identifier to identify at least one content item group including the content items.

The processing unit 130 may be configured to store all the received content items in the storage unit 150 or to select specific content items stored in accordance with a group identifier or a program identifier related to the content items. For example, if a program is recorded in the storage unit 150 or in other storage media of the broadcast receiving apparatus 100, the broadcast receiving apparatus 100 may be configured to automatically store the content items related to the same program identifier as that of the stored program. Also, the broadcast receiving apparatus 100 may be configured to automatically store the content items which belong to the content items related to the identifier of the selected group. By using a program identifier and/or a group identifier to determine whether the specific content items are stored or not, the broadcast receiving unit 100 may select the stored content items automatically without a user input.

According to an exemplary embodiment, the broadcast receiving unit 100 may receive meta data 320 and content items 330 through a broadcast stream. However, in another exemplary embodiment, the meta data 320 and/or the content items 330 may be received from other sources. For example, the broadcast receiving unit apparatus 100 may further include means for connecting to the Internet. The broadcast receiving apparatus 100 may download some or all of the content items from the Internet.

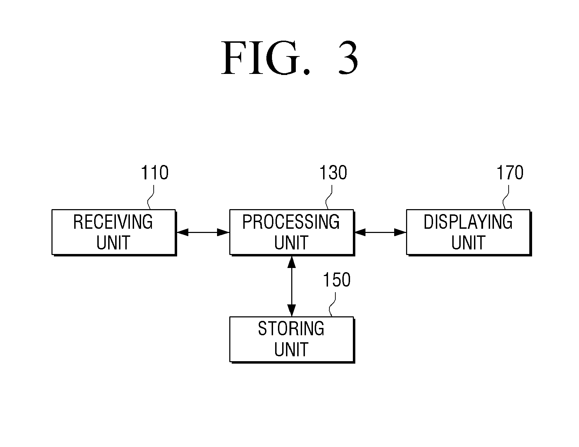

Fig. 3 is a block diagram for illustrating a broadcast receiving apparatus, according to another exemplary embodiment.

Referring to Fig. 3, the broadcast receiving apparatus 100 shown in Fig.1 further includes a display unit 170.

The broadcast receiving apparatus 100 shown in Fig. 3, for example, may be embodied as a television equipped with a set top box. That is, the broadcast receiving apparatus 100 includes a receiving unit 110, a processing unit 130, a storage unit 150 and a display unit 170. The broadcast receiving apparatus 100 shown in Fig.3 further includes the display unit 170. Also, the broadcast receiving apparatus 100 may further include a specific configuration to signal-process an image displayed by the display unit 170, but the specific explanation on this configuration will be omitted.

The receiving unit 110 receives a plurality of content items respectively corresponding to a program usable in a broadcast stream and content item information regarding each of the plurality of content items.

The processing unit 130 controls to signal-process the received broadcast stream through the receiving unit 110 and to store a plurality of the content item information after signal processing the plurality of content items and the plurality of the content item information respectively corresponding to the plurality of the content items.

The processing unit 130 may select and read out the plurality of the content items stored in the storage unit based on at least one group identifier.

At this time, the content item information may include a program identifier usable in a broadcast stream and at least one group identifier related to the content items.

At this time, the program identifier identifies a program corresponding to the content items. At least one group identifier is information that may identify at least one content item group including the content items.

The storage unit 150 stores a plurality of content items and the content item information.

The display unit 170 displays at least one related content item corresponding to the selected program in response to a selection command from the processing unit 130.

Also, the display unit 170 may consecutively display at least one content item selected by a virtual channel.

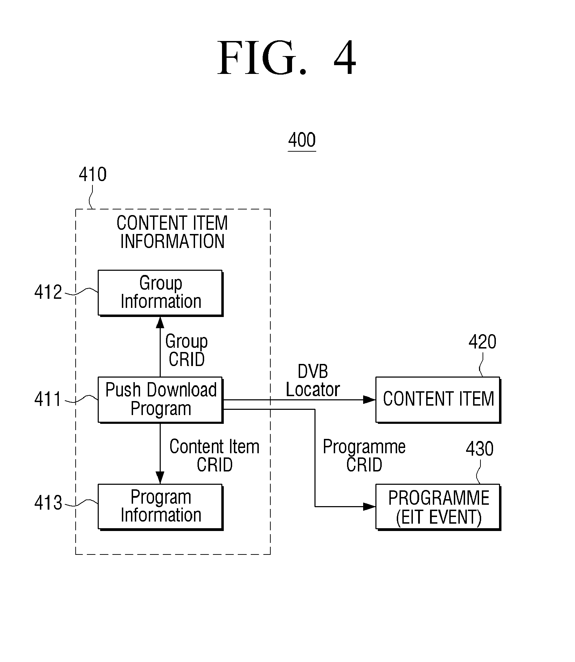

Figure 4 illustrates a structure of the content item information, according to an embodiment of the present invention.

Referring now to Fig. 4, a structure of the content item information is schematically illustrated, according to an embodiment of the present invention. In the present embodiment, the content item information structure is based on a Broadcast Record List defined in the D-Book, version 6.2. The content item information 210 shown in Fig. 3 may collectively be referred to as a "Content Record List", by analogy to a Broadcast Record List. However, unlike a conventional Broadcast Record List, the Content Record List of Fig. 3 enables multiple content items that are not included in an event information table (EIT) to be grouped together, and linked to a corresponding programme or programmes. That is, unlike the programmes that are grouped together by a Broadcast Record List, the content items grouped by the Content Record List are never part of the television schedule. Accordingly, there are a number of differences between the Content Record List and a Broadcast Record List, as will be explained below.

Continuing with reference to Fig.4, in the present embodiment the Content Record List 410 includes a PushDownloadProgram data fragment 411, a GroupInformation data fragment 412, and a ProgramInformation data fragment 413. The Content Record List 410, i.e. the content item information, includes the information required to automatically record a collection of content items to the storage module and present them to a user, without the user's input.

As shown in Fig.4, the PushDownloadProgram fragment 411 is linked to the GroupInformation fragment 412 by a group identifier(Group CRID). In the present embodiment the group identifier is formatted as a content reference identifier (CRID), and so may be referred to as a "Group CRID". The PushDownloadProgram fragment 411 also includes a locator which specifies the location of a content item 420, enabling a receiver to locate and receive the content item 420. In the present embodiment, the content item information 410 is configured for use with a Digital Video Broadcasting (DVB) compliant receiver, and accordingly the locator is formatted as a DVB locator. Additionally, the PushDownloadProgram fragment 411 includes a programme identifier which allows a receiver to identify the programme 430 to which the content item 420 corresponds. Like the group identifier, the programme identifier is also formatted as a CRID. Finally, the PushDownloadProgram fragment 411 includes a content item identifier, in the present embodiment a content item CRID, for linking the PushDownloadProgram fragment 411 to the ProgramInformation fragment 413. The ProgramInformation fragment 413 may contain information about the content item 420.

In the present embodiment, the programme 430 to which the content item 420 corresponds is available in the broadcast stream as an EIT event. However, the present invention is not limited to this case. In other embodiments, the content item 420 may correspond to a programme which is not broadcast as an EIT event, but is instead downloaded to the receiver in advance, for example as part of a TV-Anytime service.

The Content Record List of the present embodiment includes additional information in comparison to a Broadcast Record List, enabling content items of multiple types to be linked to a corresponding programme or programmes. The Content Record List can also be used to specify how the content item should be displayed. The differences between the data fragments of the Content Record List and the Broadcast Record List will now be described with reference to Figs. 4 to 6. Certain elements of the data fragments are similar to those of a conventional Broadcast Record List, and as such a detailed description of these elements will be omitted to maintain brevity.

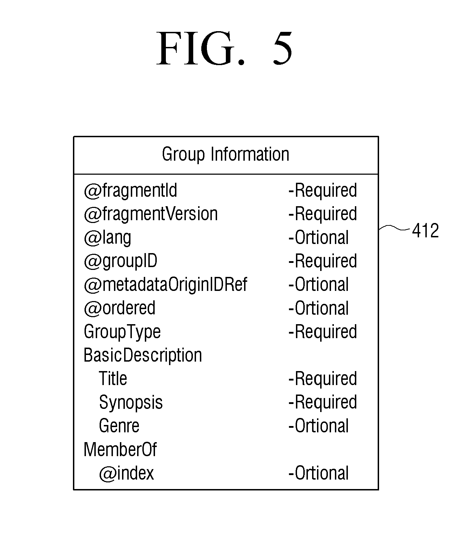

Figure 5 illustrates elements of the GroupInformation data fragment Fig 4.

Referring now to Fig. 5, elements of the GroupInformation fragment 212 of Fig. 4 are illustrated. As shown in Fig. 5, the GroupInformation fragment includes @fragmentld, @fragmentVersion, @lang, @groupID, @metadataOriginlDRef, @ordered, GroupType, BasicDescription, Title, Synopsis, Genre, MemberOf and @index elements. In some embodiments, other elements may be present in addition to those shown in Fig. 4.

The @fragmentld and @fragmentVersion elements are both required. The @fragmentld element may have a value represented by a hex string between 0x000001 and 0xFFFFFF and the @fragmentVersion element may have a value represented as a two character hex string, 0xFF The @fragmentVersion value can be incremented whenever the fragment is updated.

The @lang element is optional, and may be included to indicate the language used in any textual descriptions contained in the GroupInformation fragment. If @lang is present, it shall override a language set by a TVAMain fragment. The @groupID element is required, and is a unique identifier for the present Content Record List, in the form of a CRID. This is the Group CRID shown in Fig. 4. The @metadataOriginlDRef is optional, and holds an identifier for resolving the originator of the present Content Record List. The @ordered element is also optional, and will be set to true if child groups shall be ordered.

Regarding the GroupType element, in the present embodiment several new group types are defined in comparison to a conventional Broadcast Record List. In general, a Content Record List may have the group types "automaticAcquisitionThemed" or "automaticAcquisitionNonThemed". The GroupType element can include information about the content item type, for example whether content items included in the group are trailers, teasers, images or webpages. A receiver can be configured to use the GroupType element to determine a type of the content items included in the group, and to only subscribe to the group if the content item type is supported. For example, if the receiver does not have an internet connection, the receiver may not subscribe to groups of content items which have to be received over the internet.

In the present embodiment, the GroupType element may have one of a predetermined number of values. For example, if GroupType is set to "automaticAcquisitionTrailer", this indicates that content items belonging to the group are off-schedule trailers in the form of video/audio clips that should be recorded from the broadcast stream. If GroupType is set to "automaticAcquisitionTitleSequence", this indicates that the video clips are not updated by the broadcaster as often, so can be treated differently by the receiver. If GroupType is set to "carouselAcquisitionHtmlMetadata", this indicates that content items belonging to the group contain additional metadata, such as HTML pages, which are available from a DSM-CC carousel. In this case, the carousel location can be defined in the PushDown load Program fragment, and the receiver can be configured to open each content item separately and determine its type automatically. If GroupType is set to "carouselAcquisitionImageMetadata", this is similar to carouselAcquisitionHtmlMetadata but indicates that the group contains still images.

The BasicDescription elements include Title, Synopsis and Genre elements. The Title element holds a title of the Content Record List, which may have a predetermined maximum length, for example 40 characters. The Synopsis element holds a short description of the Content Record List's content. As with a conventional Broadcast Record List, the synopsis of the Content Record List GroupInformation fragment may have a length as defined in TS 102 822-3-1. That is, a synopsis with the length attribute "medium", having a maximum 210 characters, should always be present. Additional synopses with "short" or "long" length values may also be included. The Genre element is optional, and if present may contain a term ID from ContentCS (TS 102 822-3-2 Appendix A.8) for defining one or more genre types.

Finally, the MemberOf element allows the creation of Content Record List hierarchies by holding a reference to a more general, i.e. higher level, recording list. Therefore group IDs can be used to organise multiple Content Record Lists in a hierarchical tree structure, where the root of the group ID may take the form crid://<authority>/default1. If a hierarchical group structure is used, MemberOf is required for all groups apart from the root group. The @index element is optional, and can be used to determine ordering if the parent group indicates ordering on child groups.

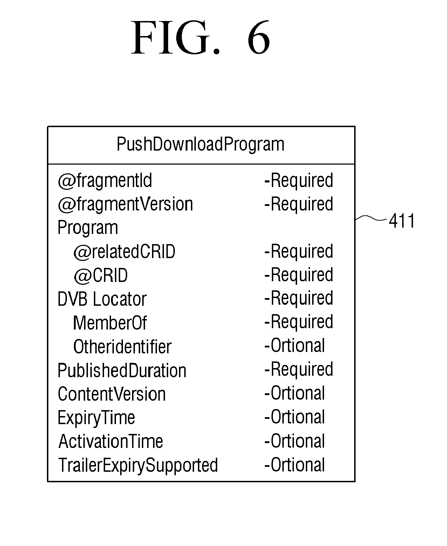

Figure 6 illustrates elements of the PushDownloadProgram data fragment of Fig. 4.

Referring now to Fig. 6, elements of the PushDownloadProgram fragment of Fig. 4 are illustrated. As shown in Fig. 6, the PushDownloadProgram fragment includes @fragmentld, @fragmentVersion, Program, @RelatedCRID, @CRID, DVB Locator, MemberOf, Otherldentifier, PublishedDuration, ContentVersion, ExpiryTime, ActivationTime, and TrailerExpirySupported elements. In some embodiments, other elements may be present in addition to those shown in Fig. 6. To maintain brevity, only those elements which differ from the PushDownloadProgram fragment of a conventional Broadcast Record List are described below.

The @RelatedCRID element is used to provide the information required to link a content item to a corresponding program. This element holds the CRID of the program to which the content item corresponds. The content item in question is identified by the next element, @CRID, which holds the CRID of the content item itself.

As described above with reference to Fig.3, a receiving unit 110 may receive content items through the broadcast stream or from another source such as a DSM-CC carousel or the internet. A location of the content item is specified by the DVB Locator element of the PushDownloadProgram fragment. This element is required because content items are not included in the EIT, since the content items are not part of the television schedule.

In more detail, in the case of a trailer the DVB locator may point to an EIT event. For example, the DVB locator may take the form:
dvb://<original_network_id>.[<transport_stream>].[service_id>;<event_id>[∼time_duration]

Alternatively, the DVB locator may link to a DSM-CC carousel, to allow the receiver to acquire content items of different types, including still pictures and html pages. In this case it can take the form:
dvb:ll<original_nehvork_id>.[<transport_stream_id>].<service_id>$<carousel_id>/path_segments

The above forms of the DVB locator are merely exemplary, and in other embodiments other formats may be used depending on a source from which the content item is available.

Continuing with reference to Fig.6, the MemberOf element contains at least one group identifier, in the form of a CRID, for identifying the group or groups to which the present PushDownloadProgram fragment belongs. That is, a single PushDownloadProgram fragment relating to a particular content item may belong to multiple groups, i.e. multiple Content Record Lists.

The TrailerExpirySupported element is optional, and can be used to indicate if the trailer can be considered expired when the content it references is no longer available in the EPG or recorded browser. This enables a broadcaster to determine whether a content item is automatically deleted when the corresponding program is no longer available. Alternatively, this element may be omitted, and the broadcast receiving apparatus 100 may be configured to determine whether or not a stored content item should be deleted when the corresponding program is no longer available.

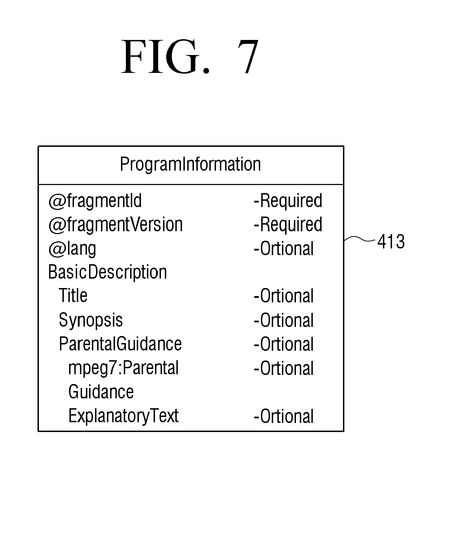

Referring now to Fig. 7, elements of the ProgramInformation data fragment of Fig. 4 are illustrated. As shown in Fig. 7, the ProgramInformation fragment includes the @fragmentld, @fragmentVersion, @lang, BasicDescription, Title, Synopsis, ParentaIGuidance, mpeg7:ParentalGuidance, and ExplanatoryText elements. The ProgramInformation fragment of a Content Record List differs from the ProgramInformation fragment of a conventional Broadcast Record List in that the Title and Synopsis elements are optional. That is, when the ProgramInformation fragment relates to a content item instead of an EIT event, i.e. a program, the Title and Synopsis elements may be omitted. Alternatively, these elements can be used to hold information specific to the content item itself.

As described above, the content item information enables a broadcast receiving apparatus 100 to link any particular content item to its corresponding program through the program identifier, which in the present embodiment is a CRID included in the @RelatedCRID element of the PushDownloadProgram fragment for the content item. In other embodiments, the content item information may be transmitted in a different format. The content item information also enables the broadcast receiving apparatus 100 to identify certain content items as belonging to a particular group or groups, based on at least one group identifier included in the MemberOf element of the PushDownloadProgram fragment for the content item. Thebroadcast receiving apparatus 100 can therefore be arranged to only store content items belonging to a selected group or groups.

Furthermore, because the required information is transmitted to the broadcast receiving apparatus 100, embodiments of the present invention are suitable for use in a unidirectional environment, where thebroadcast receiving apparatus 100 is not able to transmit information back to a source of the broadcast stream. Instead, all content items can be transmitted to the broadcast receiving apparatus 100, which can be configured to determine whether or not to store a content item when it is received.

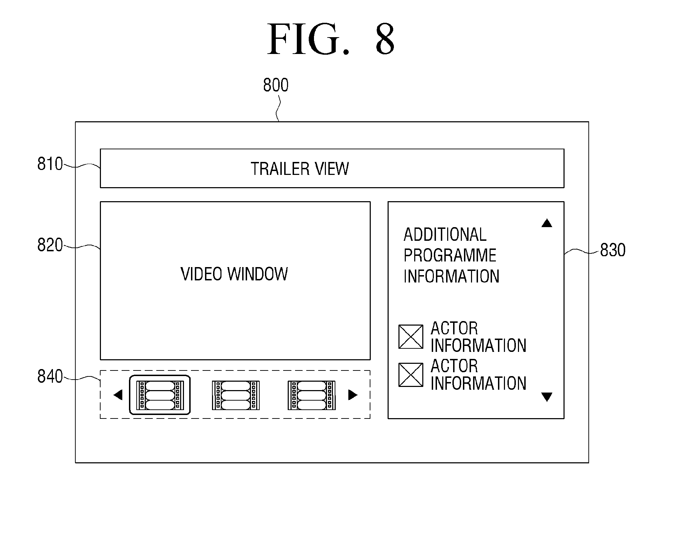

Methods of displaying the stored content items will now be described with reference to Figs. 7 and 8.

Referring now to Fig. 8, a user interface for displaying a plurality of different types of content items is illustrated, according to an embodiment of the present invention. The user interface may be implemented in an apparatus such as that shown in Fig. 2. In Fig.8, a user interface 800 is illustrated which includes a title bar 810 indicating that the display is currently set to an additional content display mode, which in the present embodiment is referred to as a "trailer view" mode. In other embodiments, the title bar 810 may be omitted. A user may select to enter the trailer view mode by inputting a display mode change command, for example when selecting a program in an electronic program guide (EPG) or in a navigation menu of a personal video recorder (PVR). When the trailer view mode is entered, the apparatus may retrieve a plurality of stored content items that correspond to the selected program, and display the content items differently according to their individual format.

In more detail, the user interface 800 includes a video display region 820, in which a selected video file such as a trailer or teaser can be displayed. The user interface 800 further includes an additional information region 830, in which additional content items of different types, such as still images and text, can be displayed. Here, the additional content items displayed in the additional information region 830 are other stored content items which correspond to the same program as the trailer currently being played in the video display region 820. If a plurality of content items in video file formats corresponding to the same program are available, for example trailers and/or teasers, a content item selection region 840 is provided to allow a user to select a different content item to be displayed. The selected content item is then reproduced in the video display region 820.

If there is only a single stored content item corresponding to the selected program in a video file format, that content item may automatically be displayed in the video display region 820 and the content item selection region 840 may be omitted.

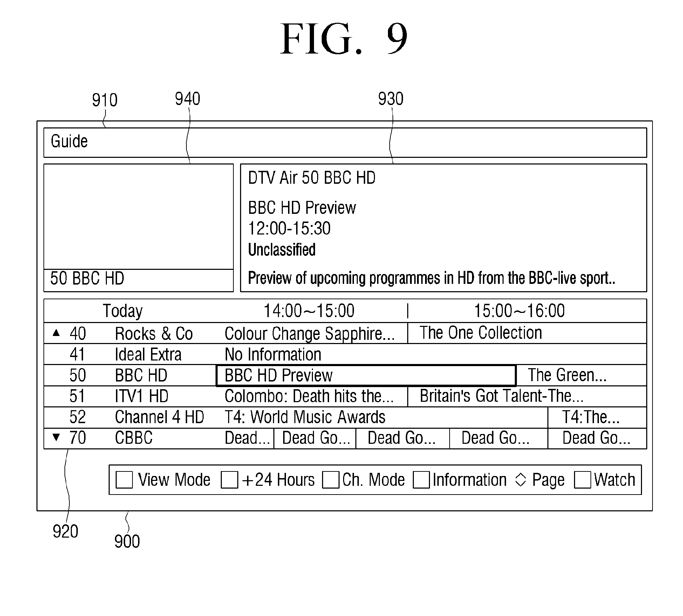

Figure 9 illustrates a user interface for displaying a content item corresponding to a selected programprogram, according to an embodiment of the present invention.

Referring now to Fig.9, a user interface for displaying a content item corresponding to a selected program is illustrated, according to an embodiment of the present invention. Like the user interface of Fig. 8, the user interface of Fig. 9 may be implemented in an apparatus such as that shown in Fig. 2. The user interface shown in Fig. 9 is a modified electronic program guide (EPG) screen, which may be displayed when a user presses a "guide" button on a remote control. As shown in Fig. 9, the user interface 900 includes a title bar 910 for indicating that the broadcast receiving apparatus 100 is currently in a "guide" mode. The title bar 910 may also display the current date and time. In other embodiments, the title bar 910 may be omitted.

The user interface 900 further includes a program selection grid 920, a program information display region 930, and a content item display region 940. The program selection grid 920 displays a list of programs that are available in the broadcast stream, for example as defined by the EIT information in the broadcast stream. Trademarks shown in Fig. 9, for example "Rocks & Co", "Ideal Extra", "BBC HD", "ITV1 HD", "Channel 4 HD" etc., are provided for illustrative purposes only, and remain the property of their respective owners. A user may select one of the programs in a conventional manner, for example by manipulating buttons on a remote control. When a program selection command is received, the selected program may be highlighted in the program selection grid 920. In the example shown in Fig. 9, the program "BBC HD Preview" is currently selected, and is highlighted in the grid 920.

In addition, when a program selection command is received, additional information about the selected program may be displayed in the program information display region 930. For example, the additional information may be included in metadata associated with the selected program. Furthermore, in the present embodiment, when a program selection command is received the apparatus is configured to retrieve a stored content item corresponding to the selected program. The stored content item may then be displayed automatically in the content item display region 940, or alternatively may be displayed in response to a command input by a user.

The stored content item displayed in the content item display region 940 may be a video file such as a trailer or teaser, or may be a different type of content item. For example, the apparatus may be configured to select a stored trailer or teaser to be played in the content item display region 940. If a plurality of video files corresponding to the selected program exist in the storage module, the apparatus may be configured to reproduce the plurality of video files consecutively in the content item display region 940. Alternatively, the apparatus may select one or more of the available video files randomly, or according to a predetermined criterion, and display the selected video file or files consecutively. If no trailer or teaser corresponding to the selected program exists in the storage module, the apparatus may select a different stored content item corresponding to the selected program, for example an image or webpage, and display this content item in the content item display region 940. In other embodiments, the user interface 900 may include other display regions for displaying a plurality of content items, in a similar manner to the user interface of Fig. 8.

In Fig. 9, the user interface 900 is shown as a modified EPG screen, in which a grid is displayed showing programs that are currently available in the broadcast stream or will be available in the near future. In other embodiments, a similar user interface may be implemented in apparatus such as a personal video recorder (PVR). In such embodiments, the grid may be replaced with a list of recorded programs, to allow a user to select one of the recorded programs to be viewed. The PVR may then be configured to retrieve a stored content item corresponding to the selected recorded program, and display the content item in a content item display region 940 such as that shown in Fig. 9.

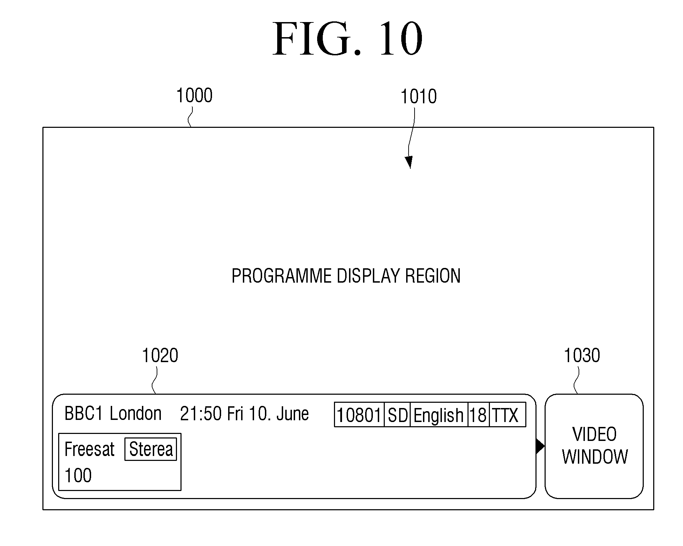

Figure 10 illustrates a user interface for displaying a content item corresponding to a program currently being viewed, according to an embodiment of the present invention.

Referring now to Fig. 10, a user interface for displaying a content item corresponding to a program currently being viewed is illustrated, according to an embodiment of the present invention. Trademarks shown in Fig. 10 are provided for illustrative purposes only, and remain the property of their respective owners. Like the user interfaces of Figs. 8 and 9, the user interface of Fig. 10 may be implemented in an apparatus such as that shown in Fig. 2. The user interface 1000 includes a program display region 1010, in which a program currently being viewed is reproduced. The user interface 1000 further includes a program information region 1020 and a content item display region 1030, both of which are overlain on the program display region 1010. The program information region 1020 and content item display region 1030 may be displayed in response to a user input when a program is being viewed, for example when a user presses an "info" button on a remote control. The user may subsequently input a further command to close the information window, in which case both the program information region 1020 and content item display region 1010 may be removed.

The program information region 1020 is similar to a conventional channel banner that may be displayed on top of a program currently being viewed. However, unlike a conventional channel banner, the user interface 1000 of the present embodiment further includes the content item display region 1010 for displaying a stored content item corresponding to the currently selected program, i.e. the program currently being viewed. When the user interface is displayed 1000, the apparatus may retrieve a stored content item corresponding to the currently selected program, such as a trailer or teaser, in a manner similar to that described above with reference to Fig. 9. The content item may then be displayed in the content item display region 1030. In the embodiment of Fig. 10, the displayed content item is a video file comprising a trailer for the currently selected program, but in other embodiments the content item may be a different type, for example a still image.

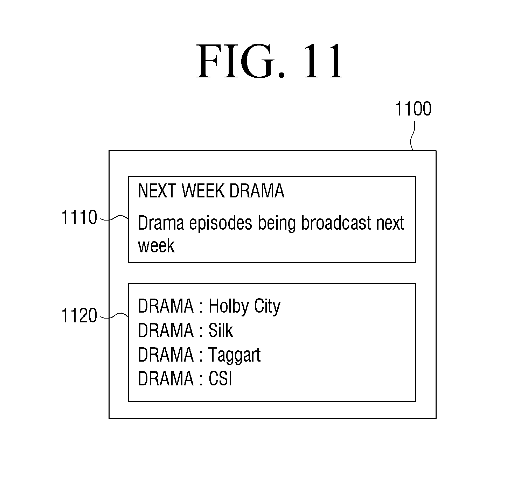

Figure 11 illustrates a user interface for displaying information about a selected virtual trailer channel.

Referring now to Fig. 11, a user interface for displaying information about a selected virtual trailer channel is illustrated, according to an embodiment of the present invention. Like the user interfaces of Figs. 8, 9 and 10, the user interface of Fig. 11 may be implemented in an apparatus such as the one shown in Fig. 2. Trademarks shown in Fig. 11 are provided for illustrative purposes only, and remain the property of their respective owners. One or more virtual trailer channels may be included in a grid for selecting one of a plurality of channels to be viewed, for example using a user interface similar to the one of Fig. 9. A user may select to view the virtual trailer channel in a manner similar to selecting any other channel to be viewed. However, unlike other channels in the grid, a virtual trailer channel is not included in the EIT of the broadcast stream, as it does not include a plurality of EIT events but instead is created locally on the apparatus. Instead of tuning to a currently selected channel and displaying a program currently being broadcast on that channel, when the virtual trailer channel is selected the apparatus retrieves a plurality of stored content items, for example trailers and/or teasers, and plays back the stored content items in a loop. In a virtual trailer channel the trailers may be grouped according to criteria such as genre, period, channel and so on.

In the present embodiment, when a virtual trailer channel is selected, the user interface 1100 of Fig. 11 is displayed to provide a user with information about the selected trailer channel. For example, a user may input a first command to select a virtual trailer channel, and may input a second command to being viewing the selected virtual trailer channel. The user interface 1100 includes a channel information region 1110 for displaying information about the selected virtual trailer channel, for example a title and synopsis included in a GroupInformation fragment corresponding to the selected channel. The user interface 1100 further includes a trailer information region 1120 for displaying a list of the trailers that are included on the currently selected channel.

Figure 11 illustrates an example in which a user has selected a virtual trailer channel named "Next week drama", which may be a virtual trailer channel for playing back to back trailers for episodes of drama programs which will be broadcast during the coming week. The trailers may relate to programs which are not yet part of the television schedule. A further example of a virtual trailer channel could be a channel named "Tonight's movies", for playing trailers for movies across all channels for the current evening. A user may input a program selection command when a trailer is being viewed, in order to book the corresponding program to be recorded, or to set a reminder.

The apparatus may use various methods to construct the virtual trailer channel. For instance, the apparatus may be configured to select stored content items to be included in a particular virtual trailer channel, according to such criteria as genre, broadcast time, broadcast channel and so on. As an example, when the virtual trailer channel titled "Next week drama" is selected, the apparatus may examine the metadata stored with each stored content item, and select a content item to be included in the channel when the metadata indicates that the genre of the content item is "drama", a broadcast time of the corresponding program is a time occurring in the next week, and the broadcast channel is a channel to which the user is subscribed. However, in another method, a virtual trailer channel may be defined remotely by a service provided. For example, a Content Record List may be defined for the virtual trailer channel, using one or more GroupInformation and PushDownloadProgram fragments to define the particular content items that are to be included in the channel. In this case, the Content Record List title may be used as the channel name, and the Content Record List synopsis may be used as a description of the channel.

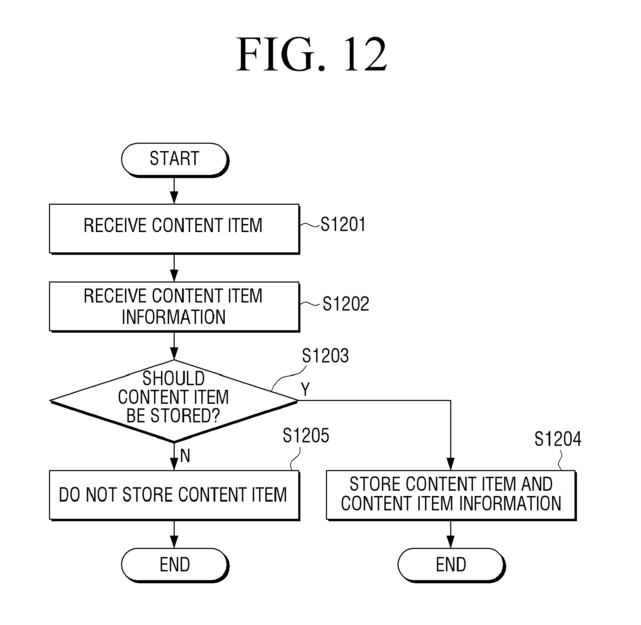

Figure 12 is a flowchart illustrating a method for use in an apparatus for receiving a broadcast stream, according to an embodiment of the present invention.

Referring now to Fig. 12, a method for use in an apparatus for receiving a broadcast stream is illustrated, according to an embodiment of the present invention. The method may be implemented in a broadcast receiving apparatus 100 such as the one shown in Fig. 1 or Fig 2. Firstly, in step S1201, the apparatus receives a content item corresponding to a program available in the broadcast stream. Secondly, in step S1202, the apparatus receives content item information for the content item. For example, the content item information may comprise metadata formatted as shown in Figs. 4, 5 and 6. The content item information includes a program identifier and at least one group identifier associated with the content item.

Next, in step S1203, the apparatus determines based on the content item information whether to store the content item. In more detail, the apparatus may use the program identifier to identify the program to which the content item corresponds, and may use the at least one group identifier to identify at least one content item group to which the content item belongs. Various arrangements are possible. The apparatus may be configured to automatically store all content items that belong to a particular group, for example if the apparatus is configured to record trailers on a virtual trailer channel defined by that group. Also, or alternatively, the apparatus may be configured to automatically record all content items corresponding to programs having a particular genre, broadcast time or broadcast channel.

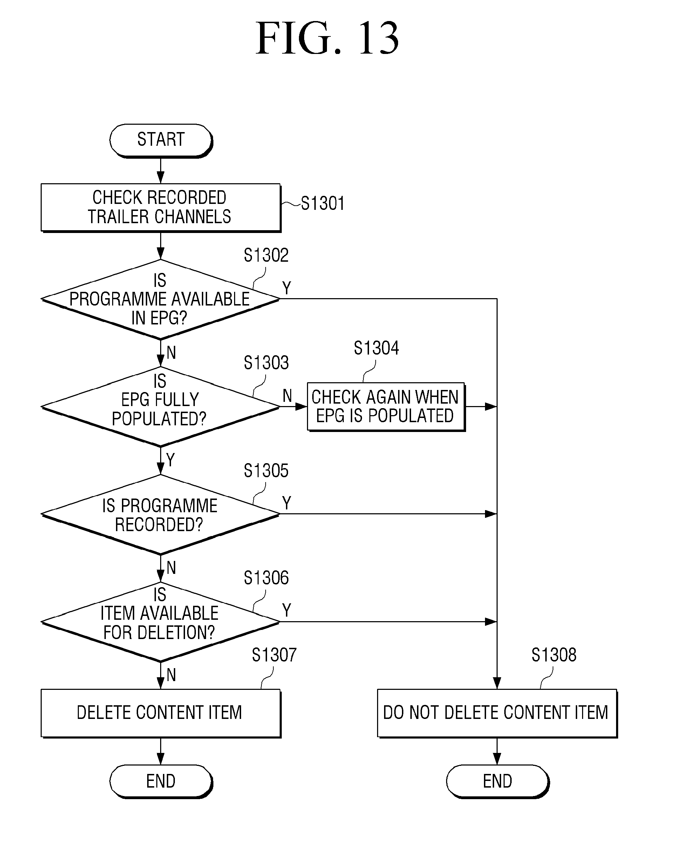

Furthermore, in step S1203 the broadcast receiving apparatus 100 may determine whether to store the content item based on the amount of storage available, and a format of the content item. For example, a program may have three corresponding content items having different formats, including a picture, a short teaser and a trailer. The broadcast receiving apparatus 100 may determine an amount of available space left in the storageunit 150. If the amount of available space is high, i.e. above a first threshold level, the apparatus may be configured to store content items of any format. If the amount of available space is moderate, i.e. between a second threshold level and the first threshold level, the second threshold being lower than the first threshold, the apparatus may be configured to only store content items of a certain format or formats. For example, only teasers and pictures may be stored, and full trailers may not be stored. If the amount of available space is low, i.e. lower than the second threshold level, the broadcast receiving apparatus 100 may only store content items of a certain format or formats. For example, only pictures may be stored. If no space is available, or when space is running now, the apparatus may determine whether any existing content items can be deleted. A method of managing stored content items is described later with reference to Fig. 13.

If it is determined that the content item should be stored, the broadcast receiving apparatus 100 proceeds to step S1204 and stores both the content item and the content item information. If it is determined that the content item should not be stored, the broadcast receiving apparatus 100 proceeds to step S1205 and does not store the content item or the content item information.

Figure 13 is a flowchart illustrating a method of managing stored content items, according to an embodiment of the present invention.

Referring now to Fig. 13, a method of managing stored content items is illustrated, according to an embodiment of the present invention. The method may be suitable for use in a broadcast receiving apparatus 100 such as the one shown in Fig. 1 or Fig.2, in order to periodically determine whether any stored content items can be deleted. This enables the broadcast receiving apparatus 100 to efficiently manage the available space in the storageunit 150, by deleting content items when they are no longer required. In the present embodiment, the method is for use when stored content items are recorded as virtual trailer channels, as described above with reference to Fig. 11.

Firstly, in step S1301, the apparatus checks each recorded trailer channel to determine which programs correspond to the stored content items. Then, in step S1302, for each program corresponding to a stored content item it is checked whether that program is available in the EPG. If the program is available, i.e. is yet to be broadcast, it is determined that a corresponding content item is still required. In this case, the broadcast receiving apparatus 100 proceeds to step S1308 and does not delete the content item.

Alternatively, if the corresponding program is not in the EPG, the broadcast receiving apparatus 100 proceeds to step S1303 and checks whether the EPG is fully populated. If the EPG is not fully populated, the apparatus proceeds to step S1304 and checks again at a later stage, once the EPG has been populated.

If the EPG is fully populated, it is determined that the corresponding program has already been broadcast, and the broadcast receiving apparatus 100 proceeds to step S1305. Here, the storage unit 150 is checked to see whether the program has been recorded, i.e. whether the program is stored locally. If the program has been recorded, the broadcast receiving apparatus 100 proceeds to step S1308 and does not delete a content item corresponding to the recorded program.

If the program has not been recorded, then it is determined that a content item corresponding to the program is no longer required and may be deleted. In some embodiments, the broadcast receiving apparatus 100 may automatically delete the content item at this stage. However, in the present embodiment, the broadcast receiving apparatus 100 is configured to perform another check before deleting the content item. Specifically, in step S1306 it is determined whether the content item is available for deletion.

In more detail, in the present embodiment a broadcaster can signal that a content item should not be automatically deleted. For example, the TrailerExpirySupported element of the PushDownloadProgram fragment for the content item may indicate that the content item should not be deleted once it has expired. In this case, the broadcast receiving apparatus 100 may determine at step S1306 that the content item is not available for deletion. This feature can be used for content items that do not change, for example the title sequence for a news program.

If it is determined at step S1306 that the content item is not available for deletion, the apparatus may be configured to wait for a predetermined time period before deleting the content item. For example, the apparatus may be configured to keep the content item for a period of 13 weeks, and if no corresponding programs referenced by the content item are received after this time the content item can be deleted.

Finally, if it is determined at step S1306 that the content item is available for deletion, the apparatus proceeds to step S1307 and deletes the content item from the storage unit 150.

The method of Fig. 13 takes advantage of the fact that content items such as trailers are typically broadcast for future programs. Therefore trailers may have been recorded that reference programs that have already been broadcast, and are no longer present in the EPG. The method of Fig. 13 allows broadcast receiving apparatus 100 to automatically delete these expired trailers, to free up space for new trailers. The broadcast receiving apparatus 100 can be configured to check for expired content items periodically, or when the available space in an internal storage module falls below a predetermined threshold.

Embodiments of the present invention have been described which enable an broadcast receiving apparatus, such as a receiver, to automatically record content items such as promotional trailers without user interaction. For example, the broadcast receiving apparatus may reserve a portion of storage in an internal storage unit for promotional content only. A large number of promotional content items may only require a relatively small amount of storage. A teaser is typically about 15-30 seconds long, whilst a trailer may be 1 minute to 1 minute and 30 seconds long. By comparison, a single movie may be 2 hours long, and require an amount of storage space equivalent to 80 trailers (80 minutes) and 80 teasers (40 minutes).

Whilst certain embodiments of the present invention have been described above, the skilled person will understand that many variations and modifications are possible without departing from the scope of the invention as defined in the accompanying claims.

The broadcast receiving method and the managing method shown in Figs. 12 and 13 may be performed on the broadcast receiving apparatus shown in Figs. 1 and 3.

Also, the broadcast receiving method and the managing method shown in Figs. 12 and 13 are included in a storage medium readable by a computer and the computer may execute the broadcast receiving method and the managing method.

Specifically, a code to perform the above-described methods, according to exemplary embodiments, may be stored in various types of recording media. Specifically, the program code may be stored in various types of recording media readable by a terminal apparatus, such as a random access memory (RAM), a flash memory, a read only memory (ROM), an erasable programmable ROM (EPROM), an electronically erasable and programmable ROM (EEPROM), a register, a hard disk, a removable disk, a memory card, a USB memory and a CD-ROM.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A broadcast receiving apparatus connectable to a display apparatus, comprising:
a receiving unit which receives a broadcast stream;
a processing unit which processes a signal so as to obtain a program usable in the broadest stream, a plurality of content items respectively corresponding to the program and content item information regarding each of the plurality of content items; and
a storage unit which stores the processed plurality of content items and the content item information,
wherein the content item information comprises an identifier of the program and at least one group identifier related to the content items, and
wherein the program identifier identifies a program corresponding to the content items, and the at least one group identifier identifies at least one content item group including the plurality of content items.

2. The broadcast receiving apparatus as claimed in claim 1, wherein the processing unit selects the plurality of content items stored in the storage unit based on at least one group identifier
wherein the receiving unit receives virtual channel information defining a virtual channel, and
wherein the processing unit selects the at least one content item based on the virtual channel information.

3. The broadcast receiving apparatus as claimed in claim 1, wherein the processing unit selects the at least one content item based on at least one or more of the at least one group identifier, time of the program and channels of the program.

4. The broadcast receiving apparatus as claimed in claim 1, wherein the broadcast receiving apparatus is a DVB-compliant receiver, and
wherein the program identifier and the at least one group identifier are content reference identifiers included in data received though the broadcast stream.

5. The broadcast receiving apparatus as claimed in claim 1, wherein the content item information further comprises locator information to identify a source so as to obtain the content items, and
wherein when the receiving unit receives the plurality of content items through the broadcast stream, the processing unit identifies a location of the content items in the broadcast stream by the locator information.

6. The broadcast receiving apparatus as claimed in claim 5, wherein the broadcast receiving apparatus is a DVB-compliant receiver, and
wherein the locator information defines an event information table in the broadcast stream.

7. The broadcast receiving apparatus as claimed in claim 5, wherein the broadcast receiving apparatus is a DVB-compliant receiver receiving the plurality of content items through a digital storage media command and control carousel (DSM CC carousel).

8. The broadcast receiving apparatus as claimed in claim 1, wherein the content item information further comprises information regarding a type of providing the content items,
wherein the providing type is any one of a video file type, a still video file type and a HTML file type.

9. The broadcast receiving apparatus as claimed in claim 8, wherein the processing unit determines storage space capacity usable in the storage unit and controls to store content items provided in one of predetermined providing types in the storage unit if a size of the usable storage space capacity is less than a predetermined value, and
wherein the processing unit determines whether a program corresponding to the stored content items is usable through the broadcast stream and deletes the content items from the storage unit if the program is not usable.

10. The broadcast receiving apparatus as claimed in claim 9, wherein the content item information further comprises deletion information regarding whether the content items are deleted or not and
wherein the processing unit does not delete the content items although the program is not usable if the deletion information orders not to delete the content items.

11. The broadcast receiving apparatus as claimed in claim 10,
wherein the processing unit deletes the content items after a predetermined time interval if the deletion information orders not to delete the content items.

12. A broadcast receiving method, comprising:
storing a plurality of content items respectively corresponding to a program usable in a broadcast stream;
receiving content item information for each of the plurality of the content items; and
storing content item information including at least one group identifier related to the content items and a program identifier,
wherein the program identifier identifies a program corresponding to the stored content items, and
wherein the at least one group identifier identifies at least one content item group including the content items.

13. The broadcast receiving method as claimed in claim 12, further comprising:
selecting stored content items based on the at least one group identifier related to the content items.

14. The broadcast receiving method as claimed in claim 12, further comprising:
receiving a command to select at least one of the programs; and
displaying at least one related content item corresponding to the selected program and which is related to the same program identifier as that of the selected program.

15. The broadcast receiving method as claimed in claim 12, comprising: selecting at least one content item from among the plurality of stored content items, consecutively displaying the at least one selected content item by a virtual channel; and
receiving virtual channel information to define a virtual channel;
wherein the selecting at least one content item comprises selecting the at least one content item based on the virtual channel information, and
wherein the plurality of content items are selected based on at least one of the at least one group identifier, time of the program and channels of the program.
